Europäisches Patentamt

European Patent Office

Office européen des brevets

(11) Publication number: **0 424 998 A1**

## (12) EUROPEAN PATENT APPLICATION

(21) Application number: **90202461.1**

(22) Date of filing: **18.09.90**

(51) Int. Cl.⁵: **A47J 45/06**

(30) Priority: **22.09.89 IT 2180089 U**

(43) Date of publication of application:
**02.05.91 Bulletin 91/18**

(84) Designated Contracting States:
**AT BE CH DE DK ES FR GB GR IT LI LU NL SE**

(71) Applicant: **AETERNUM S.r.l.**
**Via Ragazzi del 99, N. 9**
**I-25067 Lumezzane Sant'Apollonio,**
**Brescia(IT)**

(72) Inventor: **Beluzzi, Giancarlo**
**Via Parti Sera, Strada 2/A No. 2**
**I-25016 Ghedi, Brescia(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Handle for pots.**

(57) The handle (1) for pots comprises a grasping portion (4) and connection elements (5) performing the task of connecting said grasping portion (4) with the container body (3) of the pot (2). The grasping portion (4) extends along the whole perimeter of the pot (2). Such a handle (1) can also be used on a colander, of the type suitable for being directly introduced inside the pot (2) while food is being cooked in said pot.

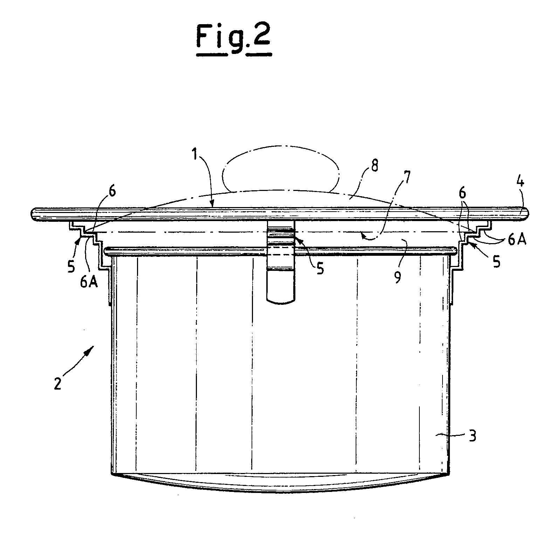

<u>Fig.2</u>

EP 0 424 998 A1

## HANDLE FOR POTS

The subject-matter of the present invention is a handle for pots.

The present pots are provided with handles so made as to enable, within the limits of possible, said pots to be grasped by the user even when they are overheated due to their use.

However, the handles known from the prior art have a limited development as compared to the perimeter of the pot, and therefore the pot can be only grasped at determined points thereof.

If, due to any reasons, such points result to be exposed to fire to an excessive extent (as it would happen e.g., in case of a wrong positioning of the pot on the heating element or burner grate), they get overheated, thus obliging the user to resort to hand protection means, with self-explanatory disadvantages.

On the contrary, the purpose of the instant finding is of providing a pot handle which is capable of obviating the above said drawbacks, i.e., is capable of making it possible the pot to be confortably grasped independently from the position in which it stands at the time at which it is grasped, and independently from the presence of possible localized overheatings of the same handle.

Such a purpose is achieved by a handle for pots comprising a grasping portion and connection/spacing elements performing the task of connecting said grasping portion with, and of spacing it apart from, the container body of a pot, characterized in that said grasping portion extends throughout the perimeter of the container body of said pot.

The invention is illustrated for merely exemplifying, non-limitative, purposes in the single hereto attached drawing table.

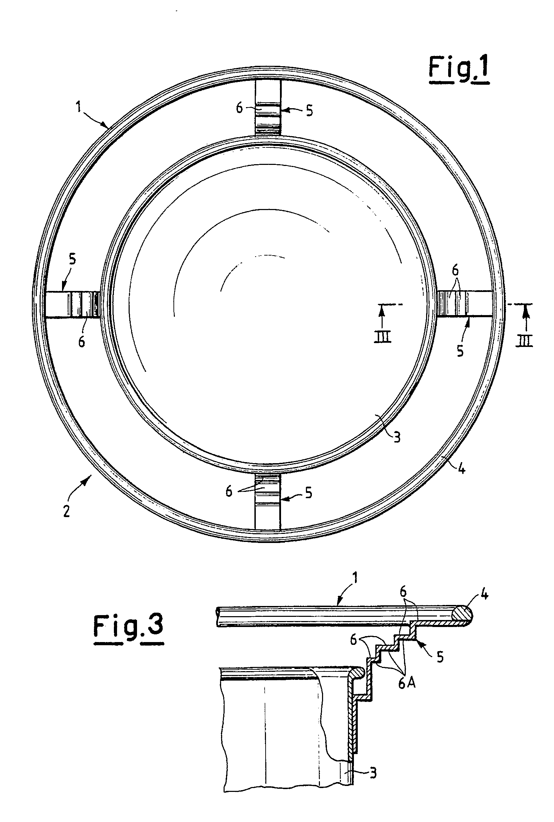

Figure 1 shows a plan view of a pot provided with a handle according to the present invention;

Figure 2 shows an elevation view of the same pot, provided with a lid;

Figure 3 shows a sectional view made along the path line III-III of Figure 1.

Referring to the above mentioned figures, the handle 1 according to the present invention is illustrated in the instant case as being an integrant part of a pot 2 which comprises a container body 3.

The handle 1 comprises a grasping portion 4 and connection elements 5 for connecting said grasping portion to the container body 3. The grasping portion 4 extends along the whole perimeter of the container 3, and in the herein illustrated case, it has a circular cross-section and a circular development.

The connection elements 5 for said grasping portion are, e.g., in a number of 4, spaced apart at equal distances along the perimeter of the container body 3.

Each element 5 comprises groups of upper, horizontal, concentric support planes (6). Said groups of support planes are each arranged at a different level relatively to the other groups of planes, and all of them coaxially with the container body (3).

When the pot 2 is used, the upper support planes 6 of each group, besides creating an impediment to the transmission of heat from the container body 3 to the grasping portion 4 of the handle 1, are capable of receiving the bottom edge 7 of lids 8, even of various diameters, selected as a function of the aperture 9 which one wants to create between the pot 2 and the lid 8, and hence of the pre-established cooking modalities.

In fact, if the container body 3 is not perfectly closed, and therefore vapours are allowed to escape from the pot through said aperture 9, the liquind can be kept constantly boiling inside the pot, without any overflowing occurring of said boiling liquid beyond the edge of the pot 2.

Such a handle 1 can also be advantageously used on a colander (not illustrated in the figures, in that it has a shape which is at all similar to the shape of the pot 2). In that case, it is possible to house the colander directly inside the interior of a pot 2 inside which "pasta" is being cooked -- of course, the pot 2 shall be so selected, as to have a larger inner diameter than the outer diameter of the colander.

In such case the pot 2, according to the size of its outer diameter, will engage a group of lower support planes 6A (parallel to the upper support planes 6), which lay on the diameter which is the most coincident with its outer diameter.

A group of upper support planes 6 can simultaneously house the bottom edge 7 of the lid 8 whose diameter is (as seen) selected as a function of the aperture 9 which one wants to create between the pot 2 and the lid 8, in order to enable the vapours to escape.

When the cooking of "pasta" is ended and a possibly present lid 8 is removed, it will be enough to extract the colander from the cooking pot in order to istantaneously separate "pasta" from its relevant cooking liquid.

In this case too, the handle 1 makes it possible the colander to be easily extracted from the pot 2, independently of whether said colander may have undergone local overheating.

**Claims**

1. Handle (1) for pots comprising a grasping portion (4) and connection and spacing elements (5) performing the task of connecting said grasping portion (4) with, and of spacing it apart from, the container body (3) of a pot (2), characterized in that said grasping portion (4) extends throughout the perimeter of the container body (3) of said pot (2).

2. Handle according to claim 1, characterized in that said grasping portion (4) has a circular cross-section and a circular development.

3. Handle according to claim 1, characterized in that the spacer elements (5) for said grasping portion (4) comprise groups of upper, horizontal, concentric support planes (6) arranged at different levels and coaxially with the container body (3), with said upper support planes (6) being capable of acting as resting seats for the bottom edge (7) of a possible lid (8).

4. Handle according to claim 3, characterized in that the spacer elements (4) comprise groups of lower support planes (6A), opposite and parallel to the upper support planes (6)

5. Handle according to claim 1, characterized in that it is associated with a colander.

6. Handle according to claim 5, characterized in that said colander is a colander for separating "pasta" from its cooking water.

7. Handle according to claim 5, characterized in that said colander is a cooking colander for vegetables.

Fig.1

Fig.3

# Fig.2

European
Patent Office

EUROPEAN SEARCH
REPORT

Application Number

EP 90 20 2461

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A-2 871 71   (J. HERTER et al.)<br>* The whole document * | 1-4 | A 47 J<br>45/06 |
| Y | GB-A-2 202 201   (MAUSER-WERKE GmbH)<br>* Page 5, lines 4-20; claim 1; figures 1,2 * | 1-4 | |
| A | DE-A-2 129 294   (SULO EISENWERKE S&L)<br>* Page 3, last line; page 4, lines 1-6; figures 6,7 * | 5-7 | |
| A | FR-A-4 651 43   (M.J.G. MEISTER) | | |
| A | US-A-4 373 642   (R.H. WOLTERS et al.) | | |

TECHNICAL FIELDS
SEARCHED (Int. Cl.5)

A 47 J
B 65 D
A 01 J
A 22 C

The present search report has been drawn up for all claims

| Place of search | Date of completion of search | Examiner |
|---|---|---|
| The Hague | 10 January 91 | MARANGONI G. |